# EUROPÄISCHE PATENTSCHRIFT

(11) **EP 1 818 233 B1**
(45) Veröffentlichungstag und Bekanntmachung des Hinweises auf die Patenterteilung: **07.09.2011**
(21) Anmeldenummer: 06101647.3
(22) Anmeldetag: 14.02.2006
(51) Int. Cl.: B60T 8/32, B60T 17/22, B60Q 1/44

(54) **Verzögerungswarnvorrichtung und -verfahren für ein Kraftfahrzeug**
Deceleration warning device and method for a vehicle
Dispositif et procédé d'avertissement de décélération pour véhicule

(43) Veröffentlichungstag der Anmeldung: 15.08.2007
(73) Patentinhaber: Ford Global Technologies, LLC, Dearborn, MI 48126 (US)
(72) Erfinder: Wey, Torsten, 47447 Moers (DE); Mould, Mike, 51375 Leverkusen (DE); Dornhege, Jens, 50259 Pulheim (DE); Amin, Kashi, 40476 Düsseldorf (DE)
(74) Vertreter: Drömer, Hans-Carsten

(56) Entgegenhaltungen:
- EP-A- 0 611 679
- DE-A1- 3 702 718
- DE-A1- 4 139 215
- DE-A1- 10 005 867
- DE-A1- 10 024 881
- DE-A1- 10 218 652
- DE-A1- 19 814 574
- US-A1- 2002 171 542

## Beschreibung

Die Erfindung betrifft ein Kraftfahrzeug mit einer Verzögerungswarnvorrichtung bei hohen negativen Beschleunigungen. Die Erfindung betrifft aber auch ein Verfahren zur Aktivierung eines Warnsignals an einem Kraftfahrzeug.

Eine nicht unerhebliche Anzahl von Unfällen im Straßenverkehr sind der Kategorie Auffahrunfall zuzuordnen. Im Rahmen der weltweiten Initiativen zur Reduktion von Unfällen wären derartige Fahrsituationen oder zumindest deren Folgen deutlich zu verringern, wenn die Existenz eines Verzögerungs- bzw. Bremsvorgangs dem nachfolgenden Fahrzeug in geeigneter Weise dargestellt würde.

Zwar ist es üblich, in Bremsanlagen von Kraftfahrzeugen Bremsleuchten einzusetzen, die dem nachfolgenden Verkehr die Betätigung der Bremse des Kraftfahrzeuges anzeigen. Allerdings geben diese Bremsleuchten lediglich eine binäre Information über einen Bremsvorgang, zeigen jedoch nicht die Intensität des Bremsvorgangs an. Das heißt, der Fahrer eines nachfolgenden Fahrzeugs sieht zwar, dass an dem vorausfahrenden Fahrzeug ein Bremsvorgang eingeleitet wird, jedoch nicht, wie stark diese Abbremsung ist.

Eine Bremsanlage, die als Zusatzinformation dem nachfolgenden Verkehr eine abrupte Abbremsung und damit eine sicherheitskritische Situation frühzeitig anzeigen könnte, würde es dem Fahrer des nachfolgenden Fahrzeugs ermöglichen, schneller adäquat auf die Gefahrensituation zu reagieren.

Derartige Warnanlagen sind mittlerweile von verschiedenen Herstellern in Ihre Fahrzeuge implementiert worden, bieten allerdings noch keinen optimalen Kompromiss zwischen Systemverfügbarkeit und potentiellen Fehlwarnungen. Teilweise treten diese Systeme nicht erst bei Notbremsungen in Aktion, sondern signalisieren bereits Annäherungen eines Fahrzeugs an den Grenzbereich. Daraus kann eine entsprechende Unzufriedenheit von Fahrzeugführern bzw. Kunden resultieren, wenn Assistenzsysteme zu oft bzw. zu früh intervenieren. Außerdem besteht die Gefahr von falschen Reaktionen anderer Verkehrsteilnehmer infolge frühzeitiger Verzögerungswarnung.

Die DE 102 18 652 A1 offenbart eine Vorrichtung zur automatischen Betätigung der Warnblinkanlage eines Kraftfahrzeuges. Die Warnblinkanlage ist bei Über- oder Unterschreitung eines vorgegebenen oder vorgebbaren Verzögerungsgrenzwerts einschaltbar, und bei Über- oder Unterschreitung eines vorgegebenen oder vorgebbaren Beschleunigungsgrenzwerts wieder ausschaltbar.

Die DE 100 24 881 A1 beschreibt ein verfahren und eine Vorrichtung zum Erzeugen eines Signals zur Ansteuerung von Bremsleuchten eines Kraftfahrzeuges mittels einer Sensorik. Mittels der Sensorik werden Zustandsdaten betreffend den Fahrstabilitätszustand und/oder den Bremszustand bereitgestellt. Um auf einen Bremslichtschalter gänzlich verzichten zu können und unter Verzicht auf den Einsatz zusätzlicher Baukomponenten oder Vermeidung aufwändiger Steuerungsverfahren, werden die Zustandsdaten erfasst und ausgewertet, wobei das Signal zur Ansteuerung der Bremsleuchten in Abhängigkeit der Auswertung erfolgt.

Die DE 297 09 110 U1 betrifft eine Warneinrichtung für Kraftfahrzeuge mit einem ABS-Bremssystem, das einen Warnungsgeber aufweist, der durch Eingriff des ABS-Systems in den Bremsvorgang aktivierbar ist. So ist in der DE 297 09 110 U1 eine Verzögerungswarnung bekannt, welche die Detektierung einer ABS-Regelung zwingend voraussetzt. Dies hat signifikante Nachteile auf die Funktion. So können u.a. im Falle von geringen Reibwerten (z. B. auf Schnee oder Eis) Fehlwarnungen auftreten, da ein ABS-System bereits für Bremsungen, die von der Verzögerung her keinerlei Notbremsung darstellen, aktiviert wird. Daneben besteht bei Verkehrsbedingungen mit hohen Reibwerten des Untergrundes (z. B. trockene Straße) keine Möglichkeit, bereits für kritische Fahrzeugverzögerungen eine Verzögerungswarnung auszugeben, solange das ABS nicht aktiviert wird. So erlauben durchaus übliche ABS-Einstellungen signifikante Verzögerungswerte ohne ABS-Eingriff.

Eine weitere Verzögerungseinrichtung ist in der DE 100 05 867 A1 offenbart. Die aus der DE'867 bekannte Warnanlage gibt beim Erkennen von Gefahren Warnsignale aus. Die Warnanlage ist mit elektronischen Schaltungen und mit Sensoren ausgerüstet, die die Fahrzeugeigenbewegung und das rückwärtige Verkehrsgeschehen erfassen, wodurch Rückschlüsse auf die Höhe eines Gefahrenpotentials zugelassen werden. Die dort beschriebene Einrichtung setzt eine zeitgleiche Prüfung der Fahrzeugeigenbewegung und des rückwärtigen Verkehrs voraus, die durch eine entsprechend geeignete Sensorik erfolgen muss. Aus der Differenz von Eigenbewegung und Bewegung des rückwärtigen Verkehrs wird auf eine gefährliche Situation geschlossen und entsprechende Warnsignale werden ausgegeben. Eine eventuell im Fahrzeug vorhandene Bremsregelanlage (ABS, ESP) wird nur insoweit berücksichtigt, als das deren Aktivierung bei der Ermittlung des Gefahrenpotentials mit einbezogen wird. Verzögerungswarnungen im Falle von hohen negativen Beschleunigungen ohne ABS/ESP Eingriff werden nicht ermöglicht., wobei auch Fehlwarnungen im Falle von niedrigen Reibwerten möglich sind.

Schließlich zeigt die EP 0611 679 B1 eine Verzögerungswarnvorrichtung, bei der für die Warnung die Erzeugung eines "Gefahrengesamtwertes" erfolgt, der über Zeit- und/oder Wegintegrale gebildet wird. Die Intensität der Verzögerungswarnung wird dann anhand des Gefahrengesamtwertes skaliert. Bremsvorgänge infolge Motorbremse (Gaswegnehmen) werden ebenfalls zur Aktivierung der Verzögerungswarnung herangezogen, ohne dass das Bremspedal betätigt werden muss. Jedoch sind die hohen Anforderungen der hier vorgeschlagenen Implementierung, die sich in entsprechenden Ansprüchen an Speicher und Rechenkapazität in einem Steuergerät äußern, als nachteilig anzusehen.

Es ist daher Aufgabe der vorliegenden Erfindung, ein Kraftfahrzeug mit einer Verzögerungswarnvorrichtung sowie ein entsprechendes Verfahren der Eingangs genannten Art mit einfachen Mitteln dahingehend zu verbessern, das die Nachteile herkömmlicher Warnanlagen bzw. Bremslichtanlagen vermeidet und die Gefahr von Auffahrunfällen im Straßenverkehr vermindert.

Erfindungsgemäß wird die Aufgabe gelöst durch eine Verzögerungswarnvorrichtung aufweisend:
Mittel zum Aufnehmen eines longitudinalen Beschleunigungswertes a;
   eine Steuereinrichtung, die dafür ausgelegt ist, an einem ihrer Eingänge den longitudinalen Beschleunigungswert a aufzunehmen sowie einen Beschleunigungsgrenzwert zu errechnen, bei dessen Überschreitung ein Warnsignal ausgegeben wird, wobei die Berechnung des Beschleunigungsgrenzwertes unter Einbeziehung von Eingabeparametern P erfolgt; wobei eine Stufe der Steuereinrichtung eine Ebene "keine Funktion", eine Ebene "Eingeschränkte Funktion" sowie eine Ebene "Normale Funktion" aufweist,
   die abhängig von der Qualität zu verarbeitender Signale aktiv sind, und zwischen denen abhängig von der Signalqualität gewechselt wird, wobei die Signalqualität über Qualitätsflags bestimmbar ist, wobei
   die Verzögerungswarnvorrichtung in der Ebene "Keine Funktion" inaktiv ist, wobei die Verzögerungswarnvorrichtung in den Ebenen "Eingeschränkte Funktion" bzw. "Normale Funktion" aktivierbar ist,
      wobei aus der Funktionsebene "Keine Funktion" in die Funktionsebene "Normale Funktion" übergegangen wird, wenn die Signalqualität hoch ist, und wobei
      bei einer mittleren Signalqualität aus der Funktionsebene "Keine Funktion" in die Funktionsebene "Eingeschränkte Funktion" übergegangen wird, und wobei
      bei Verschlechtern der Signalqualität in einer der Funktionsebenen "Eingeschränkte Funktion" und "Normale Funktion" zurück in die Funktionsebene "Keine Funktion" gewechselt wird, wobei
      ebenso von der Funktionsebene "Normale Funktion" in die Funktionsebene "Eingeschränkte Funktion" gewechselt wird, wenn sich die Signalqualität von hoch auf mittel verschlechtert, wobei
      umgekehrt von der Funktionsebene "Eingeschränkte Funktion" auf die Funktionsebene "Normale Funktion" gewechselt wird, wenn sich die Signalqualität von mittel auf hoch verbessert,
und wobei in der Ebene "Eingeschränkte Funktion" bzw. in der Ebene "Normale Funktion" ein Übergang in oder aus einem Zustand "Verzögerungswarnvorrichtung aktiv" in oder aus einen Zustand "Verzögerungswarnvorrichtung inaktiv" in Abhängigkeit von jeweiligen Eingabeparametern P durchgeführt wird, wobei
eine Filtereinrichtung zwischen das Mittel zum Aufnehmen eines longitudinalen Beschleunigungswertes und die Steuereinrichtung gesetzt ist, und
Anzeigemittel zum Anzeigen eines Alarmzustandes, wenn die Steuereinrichtung ein Warnsignal ausgibt.

Mit der erfindungsgemäßen Vorrichtung wird es ermöglicht, den nachfolgenden Verkehr über den Fall einer eventuell auftretenden Notbremsung so früh wie möglich zu informieren, um die Reaktionszeiten nachfolgender Fahrer entsprechend zu verbessern. Es handelt sich um eine binär schaltende Funktion, die nur die Systemzustände "Notbremsung" oder "keine Notbremsung" unterscheidet: überschreitet der errechnete Beschleunigungsgrenzwert einen voreingestellten Wert, so wird das Anzeigemittel aktiviert. Die vom Benutzer bzw. Fahrer optional eingebbaren Parametern P bzw. die Eingabeparameter unterstützen das Erkennen einer Notbremssituation. Bei diesen Parametern kann es sich beispielsweise um die aktuelle Wettersituation oder den Grad an "Sportlichkeit" des Fahrverhaltens des Fahrers handeln. Natürlich ist es dabei sinnvoll, wenn der Benutzer bzw. Fahrer die Funktion der Vorrichtung beeinflussende Parameter eben nicht eingibt. Denkbar ist, dass der Benutzer bzw. Fahrer die Aktivierung oder Deaktivierung selbst einstellt. Möglich ist aber selbstverständlich auch, dass die Funktion der Vorrichtung beeinflussende Parameter vom Fahrer eingebbar sind, wobei dies gleichwohl optional gelten soll.

Im Rahmen der vorliegenden Beschreibung bedeutet der Ausdruck "longitudinaler Beschleunigungswert a" dort, wo nichts anderes angegeben ist, stets eine Abbremsung bzw. Verlangsamung und somit einen negativen Beschleunigungswert. Die longitudinale Beschleunigung wird im folgenden Text bisweilen auch als Verzögerung bezeichnet.

Gemäß einer bevorzugten Ausführungsform der Erfindung ist die Steuereinrichtung darüber hinaus dafür ausgelegt, die Ausgabe des Warnsignals nach einer Zeit T abzubrechen, wobei T in Abhängigkeit von dem weiteren Verhalten des Fahrers, der Änderung der Beschleunigungswerte, der Fahrzeuggeschwindigkeit und/oder der vergangenen Zeit seit Einschalten der Verzögerungswarnanlage ermittelt wird. Der einfachste Fall der hier geschilderten Alternativen liegt in der Einstellung eines konstanten Zeitwertes für T. Diese Ausführungsform hat den Vorteil, den Algorithmus für den Betrieb der erfindungsgemäßen Vorrichtung einfach zu halten, ermöglicht jedoch keine Berücksichtigung der aktuellen Situation. Werden hingegen alternativ oder zusätzlich die Änderung der Beschleunigungswerte und die Fahrzeuggeschwindigkeit für die Berechnung von T herangezogen, so wird verhindert, dass das Anzeigemittel gegebenenfalls zu früh abgeschaltet wird, obgleich weiterhin eine Gefährdungssituation besteht.

Vorzugsweise weist die Steuereinrichtung auch Eingänge für die Aufnahme von Signalen einer Bremsregelanlage auf und ist dafür ausgelegt, den Beschleunigungsgrenzwert unter Berücksichtigung der Signale der Bremsregelanlage zu berechnen. Bei den genannten Bremsregelanlagen kann es sich beispielsweise um ein Antiblockiersystem (ABS-System) oder ein elektronisches Stabilitätsprogramm (ESP) handeln. Durch Kombination dieser Information mit dem longitudinalen Beschleunigungswert und den Eingabeparametern P wird die Verfügbarkeit der Verzögerungswarnanlage in weiteren Fahrsituationen mit weniger hohen Verzögerungswerten verbessert, wie z. B. bei niedrigem Straßenreibwert.

Beim Einsatz der Signale einer Bremsregelanlage kann die Steuereinrichtung dafür ausgelegt sein, die Zeitdauer t der Aktivierung der Bremsregelanlage zu messen und das Signal der Bremsregelanlage nur dann zu berücksichtigen, wenn die Zeitdauer t einen voreingestellten oder aus momentanen Fahrzustands- und/oder Umgebungswerten resultierenden Grenzwert überschreitet. Durch die Bewertung der Zeitdauer t wird erreicht, dass trotz erhöhter Verfügbarkeit der Verzögerungswarnung die Möglichkeit von Fehlwarnungen minimiert werden kann. Die Zeitkonstante zur Bewertung des Eingriffs der Bremsregelanlage wird entweder als fester Wert gesetzt oder aus einem Kennfeld abhängig von der Verzögerung a und der Fahrgeschwindigkeit V zu Beginn der Bremsung ermittelt.

Im Falle des Vorhandenseins eines Notbremsassistenten ist bevorzugt eine Kopplung von dessen Ansprechen mit der Verzögerungswarnung vorgesehen. Zu diesem Zweck kann die Steuereinrichtung dafür ausgelegt sein, ein Signal über den Aktivierungszustand eines Bremsassistenten für das Fahrzeug aufzunehmen und bei der Berechnung des Beschleunigungsgrenzwerts zu berücksichtigen.

Die Steuereinrichtung kann darüber hinaus dafür ausgelegt sein, die Signale der Bremsregelanlage zu ignorieren, wenn die Bremsregelanlage nur an einem der beiden angetriebenen Räder angreift. Der Grund für diese Ausführungsform liegt darin, dass es bei Bremsvorgängen mit stark unterschiedlichen Reibbeiwerten auf beiden Seiten des Fahrzeugs ("split-µ") häufig zur Aktivierung eines ABS-Eingriffs kommt, ohne dass eine Notfallbremsung vorliegt. Wird dieser Zustand, die ABS-Regelung an nur einem der beiden Vorderräder, durch die Auswertung von Raddrehzahlen und ABS-Regelinformationen erkannt, erfolgt gemäß dieser bevorzugten Ausführungsform keine Aktivierung der Verzögerungswarnanlage. Liegt dagegen eine split-µ Notfallbremsung vor, wird der ABS-Eingriff auf beiden Seiten erfolgen, um die Gieranregung abzuschwächen und das Warnsystem entsprechende aktiviert.

Gemäß einer weiteren bevorzugten Ausführungsform umfasst das Mittel zum Aufnehmen eines longitudinalen Beschleunigungswertes a Raddrehzahlsensoren. Die Raddrehzahlsensoren sind physikalisch mit der Steuereinheit (CPU) der geregelten ABS/ESP Bremsanlage verbunden. Aus diesem Grund ist eine Signalquantisierung hier in der Regel genauer aufgelöst als die auf einem Fahrzeugbus verfügbaren Werte und damit ist diese ECU bzw. CPU die bevorzugte Stelle zur Berechnung der Verzögerung. Falls notwendig, kann alternativ aus auf dem Fahrzeugbus verfügbaren Raddrehzahlsignalen eine Längsbeschleunigung ermittelt werden. Gemäß einer weiteren alternativen Ausführungsform kann die Ermittlung des longitudinalen Beschleunigungswertes a über die Art und Intensität der Betätigung des Bremspedals als weiterer Eingabeparameter erfolgen.

Eine Filterung kann im Signalfluss nach den Sensoren und nach der Ermittlung der Verzögerung vorteilhaft sein, um Fehlauslösungen der Verzögerungswarnvorrichtung durch kurzfristige Spitzenwerte zu vermeiden. Aus diesem Grund ist in einer bevorzugten Ausführungsform der Erfindung eine Filtereinrichtung zwischen das Mittel zum Aufnehmen eines longitudinalen Beschleunigungswertes und die Steuereinrichtung gesetzt ist, um kurzfristige Spitzenwerte des Beschleunigungswertes auszufiltern. Die Filterung wird geeignet gewählt, um den Kompromiss zwischen Signalverzögerung und Signalqualität aufzulösen.

Die Steuereinrichtung kann des Weiteren dafür ausgelegt sein, den Beschleunigungsgrenzwert über einen statistischen Mittelwert von Längs- und Querbeschleunigungswerten eines definierten Vergangenheitszeitraumes anzupassen (Eingabeparameter). Hierdurch wird es ermöglicht, Fehlauslösungen der Verzögerungswarnanlage während ambitionierten, insbesondere sportlichen Fahrens zu vermeiden. Mit anderen Worten kann die erfindungsgemäße Vorrichtung den spezifischen Fahrgewohnheiten eines Benutzers angepasst werden, wodurch die Funktion der Warnanlage zusätzlich verfeinert wird.

Bei den Anzeigemitteln zum Anzeigen eines Alarmzustandes kann es sich beispielsweise um von den herkömmlichen Bremsleuchten getrennte Warnblinklichter handeln. Diese Ausführungsform ist deshalb besonders vorteilhaft, weil hierdurch die bei der Bremsleuchtenvergrößerung oder Bremsleuchtenintensitätsänderung auftretenden zusätzlichen Verzögerungszeiten vermieden werden können. Falls dies aus anderen Gründen gewünscht wird, kann der Alarmzustand natürlich auch durch eine Intensitätsänderung des Lichts der herkömmlichen Bremsleuchten angezeigt werden oder es können Bremsleuchten eingesetzt werden, deren Ausleuchtungsfeld variabel ist. Im letztgenannten Fall wird das Vorhandensein eines Alarm- oder Notbremsungszustands dadurch angezeigt, dass die Größe des ausgeleuchteten Feldes gegenüber einer herkömmlichen Bremsung vergrößert ist. Auch ist es möglich, die Bremsleuchten selbst so anzusteuern, dass sie bei Vorliegen eines Alarmsignals aufblinken, während sie bei einer normalen Bremsung wie üblich konstant leuchten, solange das Bremspedal gedrückt ist. Im Übrigen ist die genutzte Darstellung der Warnung gegenüber einem nachfolgenden Verkehrsteilnehmer unabhängig von dem Auslösealgorithmus und kann entsprechend existierender Richtlinien unterschiedlicher Länder erfolgen.

Gemäß der vorliegenden Erfindung wird auch ein Verfahren angegeben, welches bevorzugt unter Einsatz der erfindungsgemäßen Vorrichtung ausgeführt wird. Das Verfahren zum Aktivieren eines Warnsignals zur Reduzierung von Auffahrunfällen im Straßenverkehr weist die folgenden Schritte auf:
a) Ermitteln eines longitudinalen Beschleunigungswertes a;
b) Errechnen eines Beschleunigungsgrenzwerts, bei dessen Überschreitung ein Warnsignal ausgegeben wird, wobei die Berechnung des Beschleunigungsgrenzwertes unter Einbeziehung von Eingabeparametern P erfolgt;
   wobei eine Stufe der Steuereinrichtung eine Ebene "keine Funktion", eine Ebene "Eingeschränkte Funktion" sowie eine Ebene "Normale Funktion" aufweist,
   die abhängig von der Qualität zu verarbeitender Signale aktiv sind, und zwischen denen abhängig von der Signalqualität gewechselt wird, wobei die Signalqualität über Qualitätsflags bestimmbar ist, wobei
   die Verzögerungswarnvorrichtung in der Ebene "Keine Funktion" inaktiv ist, wobei die Verzögerungswarnvorrichtung in den Ebenen "Eingeschränkte Funktion" bzw. "Normale Funktion" aktivierbar ist,
      wobei aus der Funktionsebene "Keine Funktion" in die Funktionsebene "Normale Funktion" übergegangen wird, wenn die Signalqualität hoch ist, und wobei
      bei einer mittleren Signalqualität aus der Funktionsebene "Keine Funktion" in die Funktionsebene "Eingeschränkte Funktion" übergegangen wird, und wobei
      bei Verschlechtern der Signalqualität in einer der Funktionsebenen "Eingeschränkte Funktion" und "Normale Funktion" zurück in die Funktionsebene "Keine Funktion" gewechselt wird, wobei
      ebenso von der Funktionsebene "Normale Funktion" in die Funktionsebene "Eingeschränkte Funktion" gewechselt wird, wenn sich die Signalqualität von hoch auf mittel verschlechtert, wobei
      umgekehrt von der Funktionsebene "Eingeschränkte Funktion" auf die Funktionsebene "Normale Funktion" gewechselt wird, wenn sich die Signalqualität von mittel auf hoch verbessert,
   und wobei in der Ebene "Eingeschränkte Funktion" bzw. in der Ebene "Normale Funktion" ein Übergang in oder aus einem Zustand "Verzögerungswarnvorrichtung aktiv" in oder aus einen Zustand "Verzögerungswarnvorrichtung inaktiv" in Abhängigkeit von jeweiligen Eingabeparametern P durchgeführt wird, und
c) Zwischenschaltung einer Filtereinrichtung zwischen das Mittel zum Aufnehmen eines longitudinalen Beschleunigungswertes und der Steuereinrichtung;
d) Ansteuern von Anzeigemitteln zum Anzeigen eines Alarmzustandes auf das Vorliegen eines Warnsignals hin.

Die Funktion der erfindungsgemäßen Vorrichtung sowie des erfindungsgemäßen Verfahrens zeichnet sich durch eine hohe Verfügbarkeit bei gleichzeitiger Vermeidung von Fehlwarnungen aus. Dies wird erzielt durch eine interpretierte Nutzung von ggf. gefilterten longitudinalen Beschleunigungswerten, wobei keine ausschließliche Abhängigkeit von der Aktivierung von Bremsregelsignalen (ABS oder ESP) besteht. Gleichzeitig ist die Verfügbarkeit von Umgebungssensorik für den Einsatz der erfindungsgemäßen Vorrichtung keine Voraussetzung. Die Funktion ist hinsichtlich Parametrierung von Beschleunigungs- und Geschwindigkeitsbereichen einfach anpassbar auch an die Vorgaben unterschiedlicher Länder.

Weitere vorteilhafte Ausgestaltungen der Erfindung sind in den Unteransprüchen und in der folgenden Figurenbeschreibung offenbart. Es zeigt die:
- Fig. 1: eine schematische Darstellung der Komponenten und Signalströme einer Ausführungsform der erfindungsgemäßen Vorrichtung; und
- Fig. 2: ein Blockdiagramm eines Ausführungsbeispiel eines Algorithmus zum Implementieren des erfindungsgemäßen Verfahrens zum Aktivieren eines Warnsignals zur Reduzierung von Auffahrunfällen im Straßenverkehr.

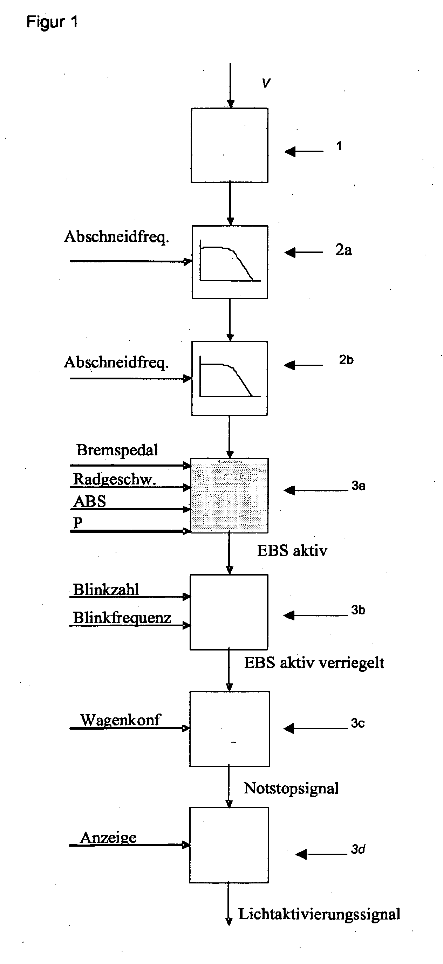

In Figur 1 ist unter dem Bezugszeichen 1 ein Mittel zum Ermitteln eines longitudinalen Beschleunigungswertes a gezeigt. Hierbei kann es sich beispielsweise um Raddrehzahlsensoren mit einer nachgeschalteten Berechnungseinrichtung, welche aus der Änderung der Raddrehzahlen bzw. der Geschwindigkeit V den tatsächlichen Beschleunigungswert errechnet, handeln. Am Ausgang des Mittels 1 liegt anschließend an die Berechnung der ungefilterte Beschleunigungswert an. Dieser kann in eine oder mehrere (hier zwei) Filtereinrichtungen 2a, 2b eingespeist werden. Bei diesen Filtereinrichtungen handelt es sich beispielsweise um Tiefpassfilter erster Ordnung mit einer einstellbaren Abschneidefrequenz. Durch Einsatz dieser Filter können kurzfristige Spitzenwerte der Bremsbeschleunigung ausgefiltert werden, um ein durch die tatsächliche Situation nicht gerechtfertigtes Ansprechen der Verzögerungswarnvorrichtung zu vermeiden. Hierdurch wird die Zuverlässigkeit der Vorrichtung erhöht.

Der gefilterte Beschleunigungswert a wird nunmehr einer Steuereinrichtung zugeführt, die verschiedene Regelungsstufen umfassen kann, wobei die einzelnen Regelungsstufen in getrennten Hardwarekomponenten ausgeführt sein können. Zunächst umfasst sie eine Logik bzw. einen Algorithmus 3a für die Aktivierung und Deaktivierung der Alarmausgabe. Hierin erfolgt die Berechnung des Beschleunigungsgrenzwertes unter Einsatz der optional vom Benutzer eingegebenen Parameter P bzw. der Eingabeparameter P. Überschreitet das longitudinale Beschleunigungssignal a diesen Grenzwert, so wird ein Alarmsignal am Ausgang der Logikeinrichtung 3a ausgegeben. In diesen Teil der Steuereinrichtung können weitere Signale eingespeist werden, wie beispielsweise die Radgeschwindigkeit, der Betätigungsgrad des Bremspedals sowie ein Ausgangssignal aus einer Bremsregelanlage. Mit Hilfe dieser zusätzlichen Informationen kann beispielsweise die Zeitdauer t, nach deren Ablauf die Ausgabe des Warnsignals gestopt wird berechnet werden. Am Ausgang der Logikeinrichtung 3a liegt in der gezeigten Darstellung ein Aktivierungssignal an. Der Algorithmus 3a wird weiter unten näher erläutert.

In der nächsten Stufe 3b der Steuereinrichtung wird das Warnsignal verriegelt, um eine minimale Aktivierungszeit der Alarmausgabe zu gewährleisten. Als Parameter für die Verriegelung können beispielsweise die Anzahl des Aufleuchtens der Blinkeinrichtungen bei einer gegebenen Blinkfrequenz gesetzt werden. Diese Parameter sind vorzugsweise fest voreingestellt und in einem entsprechenden Speicher gespeichert. Alternativ dazu kann auch ein Eingabemittel implementiert werden, um die Parameter optional benutzerdefiniert ändern zu können. Dabei kann es sich auch um dasselbe Eingabemittel handeln, das optional auch vom Benutzer verwendet wird, um die vorstehend angesprochenen Parameter P für die Berechnung des Beschleunigungsgrenzwerts einzugeben.

Das verriegelte Warnsignal wird nun dazu verwendet, um in einer folgenden Stufe 3c der Steuereinrichtung die Art des Notstopsignals in Abhängigkeit von der gegebenen Fahrzeugkonfiguration auszuwählen. D.h., die Steuerung gibt an, ob mittels des Notstopsignals die Bremsleuchten oder z.B. zusätzlich vorhandene Blinkleuchten angesteuert werden sollen, und gibt ein entsprechendes Notstopsignal an ihrem Ausgang aus.

Schließlich ist in der gezeigten Ausführungsform eine weitere Stufe 3d vorhanden, in der über den Vorrang des Notstopsignals oder einer anderen Funktion des angesteuerten Anzeigemittels entschieden wird. Am Ausgang dieser Vorrichtung wird schließlich ein Lichtaktivierungssignal ausgegeben, um das Anzeigemittel zu aktivieren.

Somit besteht die erfindungsgemäße Verzögerungsanlage im Gegensatz zu den Vorrichtungen des Standes der Technik aus einer Integration von vorhandenen Komponenten des Fahrzeugs, z.B. aus einem ABS- oder ESP-Modul, der Anzeigemittel-Ansteuerung, Signalen von Raddrehzahlsensoren und Pedalen, Informationen zur Fahrzeugkonfiguration sowie. Komponenten im HMI (Human-Machine-Interface = Verbindung Mensch-Maschine) (siehe Figur 1).

Die Auswertung der longitudinalen Beschleunigungssignale unter Zuhilfenahme der in Figur 1 angeführten Fahrzeugparameter erlaubt eine geeignete Berücksichtigung von Umgebungseinflüssen, insbesondere niedriger Straßenreibwerte, die nicht zu Fehlwarnungen führen dürfen. Die Entscheidung, wie lange die Notbremswarnung andauert, wird durch Kombination von Fahrsituation und Zeitsteuerung festgelegt.

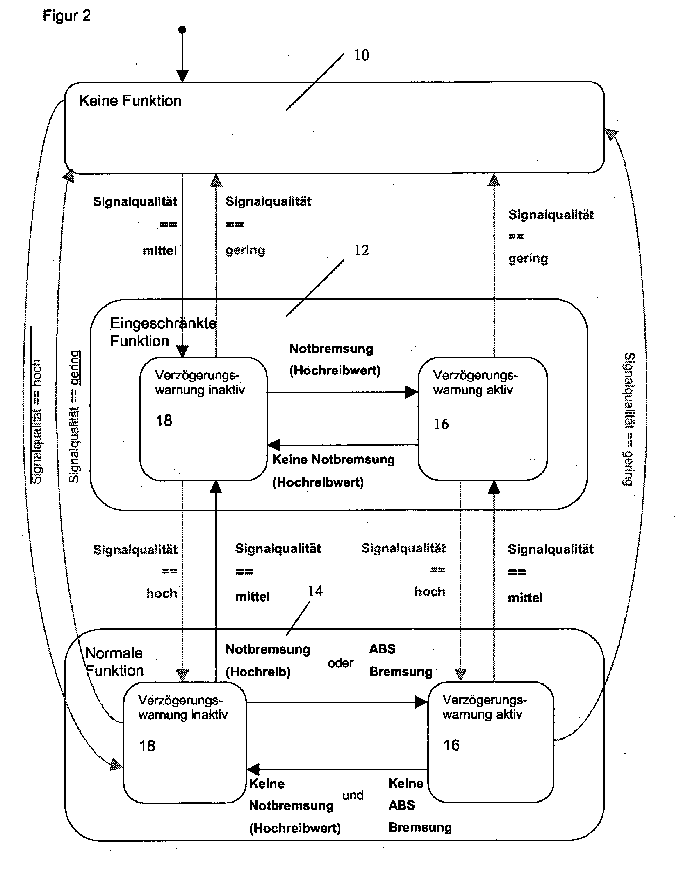

Der in Fig. 2 dargestellte Algorithmus 3a verarbeitet auf einem CAN- oder vergleichbaren Bus anliegende Signale zur Steuerung der erfindungsgemäßen Verzögerungswarnvorrichtung. Der Algorithmus implementiert insbesondere drei verschiedene Funktionsebenen "Keine Funktion" (Bezugszeichen 10), "Eingeschränkte Funktion" (Bezugszeichen 12) und "Normale Funktion" (Bezugszeichen 14), die abhängig von der Qualität der zu verarbeitenden Signale aktiv sind. Die Signalqualität wird über Qualitätsflags oder andere übliche Mechanismen zur Signalqualitätssicherung bestimmt. Zwischen den einzelnen Funktionsebenen (Bezugszeichen 10, 12 bzw. 14) wird abhängig von der Signalqualität gewechselt, wie durch die entsprechend bezeichneten Zustandsübergangspfeile dargestellt ist.

Aus der Funktionsebene 10 "Keine Funktion" wird in die Funktionsebene 14 "Normale Funktion" übergegangen, wenn die Signalqualität hoch ist. Bei einer mittleren Signalqualität wird aus der Funktionsebene 10 "Keine Funktion" in die Funktionsebene 12 "Eingeschränkte Funktion" übergegangen. Verschlechtert sich die Signalqualität in einer der Funktionsebenen 12 "Eingeschränkte Funktion" und 14 "Normale Funktion", wird zurück in die Funktionsebene 10 "Keine Funktion" gewechselt. Ebenso wird von der Funktionsebene 14 "Normale Funktion" in die Funktionsebene 12 "Eingeschränkte Funktion" gewechselt, wenn sich die Signalqualität von hoch auf mittel verschlechtert. Umgekehrt wird von der Funktionsebene 12 "Eingeschränkte Funktion" auf die Funktionsebene 14 "Normale Funktion" gewechselt, wenn sich die Signalqualität von mittel auf hoch verbessern sollte.

Innerhalb der Ebene 10 "Keine Funktion" ist die Verzögerungswarnvorrichtung inaktiv, da die Signalqualität zu gering ist, um eine zuverlässige Aktivierung der Verzögerungswarnvorrichtung zu ermöglichen. Innerhalb der Ebenen 12 "Eingeschränkte Funktion" und 14 "Normale Funktion", die bei mittlerer bzw. hoher Signalqualität aktiv sind, wird ein Übergang in oder aus dem Zustand "Verzögerungswarnung aktiv" (Bezugszeichen 16) in oder aus den Zustand "Verzögerungswarnung inaktiv" (Bezugszeichen 18) in Abhängigkeit von mehreren Parametern bzw. Eingabeparametern durchgeführt, wie im Folgenden im Detail beschrieben wird.

In der Funktionsebene 12 "Eingeschränkte Funktion" wird vom Zustand "Verzögerungswarnung inaktiv" (Bezugszeichen 18) in den Zustand 18 "Verzögerungswarnung aktiv" übergegangen, wenn eine Notbremsung auf Hochreibwert [HighMuEmergencyBraking] erfolgt. Hierzu werden die Variablen Bremspedalstellung [Brake], Fahrzeuggeschwindigkeit [VehicleSpeed] und Längsbeschleunigung [LongAccOverGround] und die Parameter Geschwindigkeitsschwelle Hochreibwert [VehicleSpeedHighMuEntry] und Verzögerungsschwelle Längsbeschleunigung Hochreibwert [DecelerationHighMuEntry] entsprechend der Übergangsfunktion:

| | | | |
|---|---|---|---|
| HighMuEmergencyBraking = ( | Brake | | |
| | | && | VehicleSpeed > VehicleSpeedHighMuEntry |
| | | && | LongAccOverGroundLongEvent == true |
| | | && | LongAccOverGround < DecelerationHighMuEntry ); |

berücksichtigt. Weiterhin ist dabei überprüfbar, ob die Längsbeschleunigung [LongAccOverGround] für eine Mindestzeitdauer kleiner als die Verzögerungsschwelle Längsbeschleunigung Hochreibwert [LongAccOverGroundLongEvent] ist.

In der Funktionsebene 14 "Normale Funktion" wird vom Zustand 18 "Verzögerungswarnung inaktiv" in den Zustand 16 "Verzögerungswarnung aktiv" übergegangen, wenn eine Notbremsung auf Hochreibwert [HighMuEmergencyBraking] oder auch eine ABS-Bremsung [ABSEmergencyBraking] erfolgt. Zusätzlich zu den bereits oben aufgelisteten Variablen und Parametern werden die Parameter Geschwindigkeitsschwelle Niedrigreibwert [VehicleSpeedLowMu] und Verzögerungsschwelle Längsbeschleunigung Niedrigreibwert [DecelerationLowMuEntry] berücksichtigt. Ebenfalls ist überprüfbar, ob die ABS-Funktionalität für eine Mindestzeitdauer aktiv ist [ABSModelLongEvent]. Diese Übergangsfunktion läßt sich wie folgt beschreiben:

| | | | |
|---|---|---|---|
| ABSEmergencyBraking = ( | Brake | | |
| | | && | ABSModeLongEvent == true |
| | | && | LongAccOverGround < DecelerationLowMuEntry |
| | | && | VehicleSpeed > VehicleSpeedLowMu) |

In beiden Funktionsebenen 12 und 14 wird vom Zustand 16 "Verzögerungswarnung aktiv" in den Zustand 18 "Verzögerungswarnung inaktiv" übergegangen, wenn keine Notbremsung auf Hochreibwert [NotHighMuEmergencyBraking] mehr erfolgt. Dieser Übergang entspricht der invertierten Funktion zum Übergang Notbremsung auf Hochreibwert [HighMuEmergencyBraking]. Im einzelnen ist überprüfbar, ob die Fahrzeuggeschwindigkeit eine Deaktivierungsschwelle [VehicleSpeedDeactivation] unterschreitet,oder ob die Bremspedalstellung [Brake] inaktiv ist. Eine weiteres Übergangskriterium ist, dass die Längsbeschleunigung [LongAccOverGround] eine Verzögerungsschwelle Längsbeschleunigung Hochreibwert [DecelarationHighMuExit] überschreitet, bei gleichzeitiger Geschwindigkeit des Fahrzeugs [VehicleSpeed] oberhalb einer Mindestgeschwindigkeit [VehicleSpeedAnyMuExit]. Dies ist mittels folgender Übergangsfunktion:

```
NotHighMuEmergencyBraking =
        VehicleSpeed < VehicleSpeedDeactivation
         ∥ !Brake
     ∥((LongAccOverGround>DecelerationHighMuExit)&&(VehicleSpeed>VehicleSpeedAnyMuExit));
```

beschreibbar. Zusätzlich wird in Funktionsebene 14 beim Übergang vom Zustand 16 "Verzögerungswarnung aktiv" in den Zustand 18 "Verzögerungswarnung inaktiv" geprüft, ob keine ABS-Bremsung [NotABSEmergencyBraking] vorliegt, was mittels folgenden Zusammenhang beschreibbar ist:

```
  NotABSEmergencyBraking = !ABSModeLongEvent;
```

Für den Übergang in den Zustand "Verzögerungswarnung inaktiv" in den Funktionsebenen 12 "Eingeschränkte Funktion" [DegradedOperationActive] bzw. 14 "Normale Funktion" [NormalOperationActive] kann einen Alternative definiert werden, wenn zusätzlich ein Zustand Fahrzeugstillstand [Standstill] berücksichtigt wird, was anhand folgenden Zusammenhangs beschreibbar ist:

```
 int Standstill = false;
 if ( DegradedOperationActive ∥ NormalOperationActive)
  {
  if (VehicleSpeed < VehicleSpeedAtStandstill) Standstill = true;
  }
 else Standstill = false;
 NotHighMuEmergencyBraking =
        VehicleSpeed < VehicleSpeedDeactivation
       ∥ (!Brake && !Ständstill)
            ∥ ( (LongAccOverGround > DecelerationHighMuExit ) && ( VehicleSpeed >
 VehicleSpeedAnyMuExit))
         ∥ ((LongAccOverGround > AccelerationExit) && Standstill)
         ∥ ((VehicleSpeed > VehicleSpeedAfterStandstill) && Standstill );
  NotABSEmergencyBraking = !ABSModeLongEvent;
```

Hierbei ist zusätzlich überprüfbar, ob das Fahrzeug eine Mindestgeschwindigkeit [VehicleSpeedAtStandstill] unterschreitet, wobei für den Fall des Fahrzeugstillstandes Schwellwerte zur Längsbeschleunigung [AccelerationExit] und Fahrzeuggeschwindigkeit [VehicleSpeedAfterStandstill] entsprechend angepasst sind.

Die jeweiligen Übergangsfunktionen sind in c-ähnlicher Schreibweise angegeben.

Der obige Algorithmus wurde anhand eines Zustandsdiagramms erläutert, bei dem Übergänge zwischen den Funktionsebenen 10, 12 und 14 durch die Qualität der verarbeiteten Signale, die von einem Bus abgegriffen werden, gesteuert werden. Innerhalb der beiden Funktionsebenen 12, 14 in denen die Verzögerungswarnung gemäß der Erfindung aktiviert werden kann, werden Zustandsübergänge durch verschiedene Parameter und Variablen gesteuert, wie oben aufgelistet. Hierbei kann die Auswertung der einzelnen Variablen und Parameter an die Anforderungen an die Verzögerungswarnung angepasst werden.

## Patentansprüche

1. Verzögerungswarnvorrichtung zur Reduzierung von Auffahrunfällen im Straßenverkehr, aufweisend:
Mittel (1) zum Aufnehmen eines longitudinalen Beschleunigungswertes a;
eine Steuereinrichtung (3a, 3b, 3c, 3d), die an einem ihrer Eingänge den longitudinalen Beschleunigungswert a aufnimmt sowie einen Beschleunigungsgrenzwert detektiert, bei dessen Überschreitung ein Warnsignal ausgegeben wird, wobei die Detektion des Beschldunigungsgrenzwertes unter Einbeziehung von Eingabeparametern P erfolgt,
wobei eine Stufe (3a) der Steuereinrichtung eine Ebene (10) "keine Funktion", eine Ebene (12) "Eingeschränkte Funktion" sowie eine Ebene (14) "Normale Funktion" aufweist,
die abhängig von der Qualität zu verarbeitender Signale aktiv sind, und zwischen denen abhängig von der Signalqualität gewechselt wird, wobei die Signalqualität über Qualitätsflags bestimmbar ist, wobei
die Verzögerungswarnvorrichtung in der Ebene (10) "Keine Funktion" inaktiv ist, wobei die Verzögerungswarnvorrichtung in den Ebenen (12) "Eingeschränkte Funktion" bzw. (14) "Normale Funktion" aktivierbar ist,
wobei aus der Funktionsebene (10) "Keine Funktion" in die Funktionsebene (14) "Normale Funktion" übergegangen wird, wenn die Signalqualität hoch ist, und wobei
bei einer mittleren Signalqualität aus der Funktionsebene (10) "Keine Funktion" in die Funktionsebene (12) "Eingeschränkte Funktion" übergegangen wird, und wobei
bei Verschlechtern der Signalqualität in einer der Funktionsebene (12) "Eingeschränkte Funktion" und (14) "Normale Funktion" zurück in die Funktionsebene (10) "Keine Funktion" gewechselt wird, wobei
ebenso von der Funktionsebene (14) "Normale Funktion" in die Funktionsebene (12) "Eingeschränkte Funktion" gewechselt wird, wenn sich die Signalqualität von hoch auf mittel verschlechtert, wobei
umgekehrt von der Funktionsebene (12) "Eingeschränkte Funktion" auf die Funktionsebene (14) "Normale Funktion" gewechselt wird, wenn sich die Signalqualität von mittel auf hoch verbessert,
und wobei in der Ebene (12) "Eingeschränkte Funktion" bzw. in der Ebene (14) "Normale Funktion" ein Übergang in oder aus einem Zustand "Verzögerungswarnvorrichtung aktiv" (16) in oder aus einen Zustand "Verzögerungswarnvorrichtung inaktiv" (18) in Abhängigkeit von jeweiligen Eingabeparametern P durchgeführt wird,
eine Filtereinrichtung (2a,2b), die zwischen das Mittel (1) zum Aufnehmen des longitudinalen Beschleunigungswertes und die Steuereinrichtung gesetzt ist, und
Anzeigemittel zum Anzeigen eines Alarmzustandes, wenn die Steuereinrichtung ein Warnsignal ausgibt.

2. Verzögerungswarnvorrichtung nach Anspruch 1,
**dadurch gekennzeichnet, dass**
die Steuereinrichtung darüber hinaus dafür ausgelegt ist, die Ausgabe des Warnsignals nach einer Zeit T abzubrechen, wobei T in Abhängigkeit von dem weiteren Verhalten des Fahrers, der Änderung der Beschleunigungswerte, der Fahrzeuggeschwindigkeit und/oder der vergangenen Zeit seit Einschalten der Verzögerungswarnanlage ermittelt wird.

3. Verzögerungswarnvorrichtung nach Anspruch 1 oder 2,
**dadurch gekennzeichnet, dass**
die Steuereinrichtung Eingänge für die Aufnahme von Signalen einer Bremsregelanlage aufweist und dafür ausgelegt ist, den Beschleunigungsgrenzwert unter Berücksichtigung der Signale der Bremsregelanlage zu berechnen.

4. Verzögerungswarnvorrichtung nach Anspruch 3,
**dadurch gekennzeichnet, dass**
die Steuereinrichtung dafür ausgelegt ist, die Zeitdauer t der Aktivierung der Bremsregelanlage zu messen und das Signal der Bremsregelanlage nur dann zu berücksichtigen, wenn die Zeitdauer t einen Grenzwert überschreitet.

5. Verzögerungswarnvorrichtung nach Anspruch 3 oder 4,
**dadurch gekennzeichnet, dass**
die Steuereinrichtung dafür ausgelegt ist, die Signale der Bremsregelanlage zu ignorieren, wenn die Bremsregelanlage nur an einem der beiden angetriebenen Räder angreift.

6. Verzögerungswarnvorrichtung nach einem der vorhergehenden Ansprüche,
**dadurch gekennzeichnet, dass**
die Steuereinrichtung dafür ausgelegt ist, ein Signal über den Aktivierungszustand eines Bremsassistenten für das Fahrzeug aufzunehmen und bei der Berechnung des Beschleunigungsgrenzwerts zu berücksichtigen.

7. Verzögerungswarnvorrichtung nach einem der vorhergehenden Ansprüche,
**dadurch gekennzeichnet, dass**
das Mittel (1) zum Aufnehmen eines longitudinalen Beschleunigungswertes a Raddrehzahlsensoren umfasst.

8. Verzögerungswarnvorrichtung nach einem der vorhergehenden Ansprüche,
**dadurch gekennzeichnet, dass**
die Steuereinrichtung dafür ausgelegt ist, den Beschleunigungsgrenzwert über einen statistischen Mittelwert von Längs- und Querbeschleunigungswerten eines definierten Vergangenheitszeitraumes anzupassen.

9. Verfahren zum Aktivieren eines Warnsignals zur Reduzierung von Auffahrunfällen im Straßenverkehr mit einer Verzögerungswarnvorrichtung nach einem der vorhergehenden Ansprüche, aufweisend die folgenden Schritte:
a) Ermitteln eines longitudinalen Beschleunigungswertes a;
b) Errechnen eines Beschleunigungsgrenzwerts, bei dessen Überschreitung ein Warnsignal ausgegeben wird, wobei die Berechnung des Beschleunigungsgrenzwertes unter Einbeziehung von Eingabeparametern P erfolgt;
wobei eine Stufe (3a) der Steuereinrichtung eine Ebene (10) "keine Funktion", eine Ebene (12) "Eingeschränkte Funktion" sowie eine Ebene (14) "Normale Funktion" aufweist,
die abhängig von der Qualität zu verarbeitender Signale aktiv sind, und zwischen denen abhängig von der Signalqualität gewechselt wird, wobei die Signalqualität über Qualitätsflags bestimmbar ist, wobei
die Verzögerungswarnvorrichtung in der Ebene (10) "Keine Funktion" inaktiv ist, wobei die Verzögerungswarnvorrichtung in den Ebenen (12) "Eingeschränkte Funktion" bzw. (14) "Normale Funktion" aktivierbar ist,
wobei aus der Funktionsebene (10) "Keine Funktion" in die Funktionsebene (14) "Normale Funktion" übergegangen wird, wenn die Signälqualität hoch ist, und wobei
bei einer mittleren Signalqualität aus der Funktionsebene (10) "Keine Funktion" in die Funktionsebene (12) "Eingeschränkte Funktion" übergegangen wird, und wobei
bei Verschlechtern der Signalqualität in einer der Funktionsebenen (12) "Eingeschränkte Funktion" und (14) "Normale Funktion" zurück in die Funktionsebene (10) "Keine Funktion" gewechselt wird, wobei
ebenso von der Funktionsebene (14) "Normale Funktion" in die Funktionsebene (12) "Eingeschränkte Funktion" gewechselt wird, wenn sich die Signalqualität von hoch auf mittel verschlechtert, wobei
umgekehrt von der Funktionsebene (12) "Eingeschränkte Funktion" auf die Funktionsebene (14) "Normale Funktion" gewechselt wird, wenn sich die Signalqualität von mittel auf hoch verbessert,
und wobei in der Ebene (12) "Eingeschränkte Funktion" bzw. in der Ebene (14) "Normale Funktion" ein Übergang in oder aus einem Zustand "Verzögerungswarnvorrichtung aktiv" (16) in oder aus einen Zustand "Verzögerungswarnvorrichtung inaktiv" (18) in Abhängigkeit von jeweiligen Eingabeparametern P durchgeführt wird,
c) Zwischenschaltung einer Filtereinrichtung (2a; 2b) zwischen das Mittel (1) zum Aufnehmen eines longitudinalen Beschleunigungswertes und der Steuereinrichtung; und
d) Ansteuern von Anzeigemitteln zum Anzeigen eines Alarmzustandes auf das Vorliegen eines Warnsignals hin.

## Claims

1. Deceleration warning device for reducing rear-end collisions in road traffic, comprising:
means (1) for detecting a longitudinal acceleration value a;
a control device (3a, 3b, 3c, 3d) which receives the longitudinal acceleration value a at one of its inputs and calculates an acceleration limit value, the exceeding of which prompts a warning signal to be emitted, the calculation of the acceleration limit value incorporating input parameters P,
wherein a stage (3a) of the control device includes a "No function" level (10), a "Limited function" level (12) and a "Normal function" level (14),
which are active as a function of the quality of the signals to be processed, and the system switches between said levels depending on the signal quality, it being possible to determine the signal quality by means of quality flags,
the deceleration warning device being inactive in the "No function" level (10), it being possible to activate the deceleration warning device in the "Limited function" level (12) and in the "Normal function" level (14),
the system passing from function level (10) "No function" to function level (14) "Normal function" if signal quality is high, and
with medium signal quality the system passing from function level (10) "No function" to function level (12) "Limited function", and
if signal quality deteriorates in one of the function levels (12) "Limited function" and (14) "Normal function", the system switching back to function level (10) "No function",
the system likewise switching from function level (14) "Normal function" to function level (12) "Limited function" if signal quality deteriorates from high to medium,
the system inversely switching from function level (12) "Limited function" to function level (14) "Normal function" if signal quality improves from medium to high,
and a transition to or from a "Deceleration warning device active" state (16) to or from a "Deceleration warning device inactive" state (18) being executed in the "Limited function" level (12) and in the "Normal function" level (14) as a function of momentary input parameters P,
a filter device (2a, 2b) is interposed between the means (1) for detecting the longitudinal acceleration value and the control device, and
display means for displaying an alarm state when the control device emits a warning signal.

2. Deceleration warning device according to Claim 1,
**characterized in that**
the control device is additionally designed to terminate the emitting of the warning signal after a time T, T being determined as a function of the further behavior of the driver, change in the acceleration values, vehicle speed and/or elapsed time since the switching on of the deceleration warning system.

3. Deceleration warning device according to Claim 1 or 2,
**characterized in that**
the control device has inputs for receiving signals of a brake control system and is designed to calculate the acceleration limit value while taking account of the signals of the brake control system.

4. Deceleration warning device according to Claim 3,
**characterized in that**
the control device is designed to measure the duration t of activation of the brake control system and to take account of the signal of the brake control system only if the duration t exceeds a limit value.

5. Deceleration warning device according to Claim 3 or 4,
**characterized in that**
the control device is designed to ignore the signals of the brake control system if the brake control system acts on only one of the two driven wheels.

6. Deceleration warning device according to any one of the preceding claims,
**characterized in that**
the control device is designed to receive a signal regarding the activation state of a brake assist system of the vehicle and to take account thereof in calculating the acceleration limit value.

7. Deceleration warning device according to any one of the preceding claims,
**characterized in that**
the means (1) for detecting a longitudinal acceleration value a include wheel speed sensors.

8. Deceleration warning device according to any one of the preceding claims,
**characterized in that**
the control device is designed to adapt the acceleration limit value using a statistical mean value of the longitudinal and lateral acceleration values of a defined past time period.

9. Method for activating a warning signal to reduce rear-end collisions in road traffic, with a deceleration warning device according to any one of the preceding claims, comprising the following steps:
a) detecting a longitudinal acceleration value a;
b) calculating an acceleration limit value upon exceeding of which a warning signal is emitted, the calculation of the acceleration limit value incorporating input parameters P;
wherein a stage (3a) of the control device includes a "No function" level (10), a "Limited function" level (12) and a "Normal function" level (14),
which are active as a function of the quality of the signals to be processed, and the system switches between said levels depending on the signal quality, it being possible to determine the signal quality by means of quality flags,
the deceleration warning device being inactive in the "No function" level (10), it being possible to activate the deceleration warning device in the "Limited function" level (12) and in the "Normal function" level (14),
the system passing from function level (10) "No function" to function level (14) "Normal function" if signal quality is high, and
with medium signal quality the system passing from function level (10) "No function" to function level (12) "Limited function", and
if signal quality deteriorates in one of the function levels (12) "Limited function" and (14) "Normal function", the system switching back to function level (10) "No function",
the system likewise switching from function level (14) "Normal function" to function level (12) "Limited function" if signal quality deteriorates from high to medium,
the system inversely switching from function level (12) "Limited function" to function level (14) "Normal function" if signal quality improves from medium to high,
and a transition to or from a "Deceleration warning device active" state (16) to or from a "Deceleration warning device inactive" state (18) being executed in the "Limited function" level (12) and in the "Normal function" level (14) as a function of momentary input parameters P,
c) interposing a filter device (2a; 2b) between the means (1) for detecting a longitudinal acceleration value and the control device, and
d) activating display means for displaying an alarm state if a warning signal is present.

## Revendications

1. Dispositif d'alerte de ralentissement pour réduire les carambolages en circulation routière, présentant :
des moyens (1) pour capter une valeur d'accélération longitudinale a ;
un dispositif de commande (3a, 3b, 3c, 3d) qui capte à l'une de ses entrées la valeur d'accélération longitudinale a et calcule une valeur limite d'accélération dont le dépassement provoque l'émission d'un signal d'alerte, le calcul de la valeur limite d'accélération s'effectuant en faisant intervenir des paramètres saisis P,
un étage (3a) du dispositif de commande présentant un plan (10) « sans fonction », un plan (12) « fonction limitée » et un plan (14) « fonction normale »,
lesquels sont actifs en fonction de la qualité du signal à traiter et entre lesquels a lieu une alternance en fonction de la qualité du signal, la qualité du signal pouvant être déterminée par le biais de marqueurs de qualité,
le dispositif d'alerte de ralentissement étant inactif dans le plan (10) « sans fonction », le dispositif d'alerte de ralentissement pouvant être activé dans le plan (12) « fonction limitée » ou (14) « fonction normale »,
une transition du plan de fonction (10) « sans fonction » au plan de fonction (14) « fonction normale » ayant lieu lorsque la qualité du signal est élevée et
une transition du plan de fonction (10) « sans fonction » au plan de fonction (12) « fonction limitée » ayant lieu en présence d'une qualité moyenne du signal et
un retour au plan de fonction (10) « sans fonction » ayant lieu en présence d'une qualité de signal dégradée dans l'un des plans de fonction (12) « fonction limitée » et (14) « fonction normale »,
de même, un changement du plan de fonction (14) « fonction normale » au plan de fonction (12) « fonction limitée » ayant lieu lorsque la qualité du signal se dégrade d'élevée à moyenne,
à l'inverse, un changement du plan de fonction (12) « fonction limitée » au plan de fonction (14) « fonction normale » ayant lieu lorsque la qualité du signal s'améliore de moyenne à élevée,
et, dans le plan (12) « fonction limitée » ou dans le plan (14) « fonction normale », une transition dans ou
depuis un état « dispositif d'alerte de ralentissement actif » (16) dans ou depuis un état « dispositif d'alerte de ralentissement inactif » (18) étant effectuée en fonction des paramètres saisis P respectifs,
un dispositif de filtrage (2a, 2b) qui se trouve entre les moyens (1) pour capter la valeur d'accélération longitudinale et le dispositif de commande, et
des moyens d'affichage pour afficher un état d'alarme lorsque le dispositif de commande délivre un signal d'alerte.

2. Dispositif d'alerte de ralentissement selon la revendication 1, **caractérisé en ce que** le dispositif de commande est en outre conçu pour interrompre la délivrance du signal d'alerte après un temps T, T étant déterminé en fonction de la suite du comportement du conducteur, de la modification des valeurs d'accélération, de la vitesse du véhicule et/ou du temps écoulé depuis la mise en fonction de l'équipement d'alerte de ralentissement.

3. Dispositif d'alerte de ralentissement selon la revendication 1 ou 2, **caractérisé en ce que** le dispositif de commande présente des entrées pour capter les signaux d'un équipement de régulation du freinage et est conçu pour calculer la valeur limite d'accélération en tenant compte des signaux de l'équipement de régulation du freinage.

4. Dispositif d'alerte de ralentissement selon la revendication 3, **caractérisé en ce que** le dispositif de commande est conçu pour mesurer la durée t d'activation de l'équipement de régulation du freinage et pour ne tenir compte du signal de l'équipement de régulation du freinage que lorsque la durée t dépasse une valeur limite.

5. Dispositif d'alerte de ralentissement selon la revendication 3 ou 4, **caractérisé en ce que** le dispositif de commande est conçu pour ignorer les signaux de l'équipement de régulation du freinage lorsque l'équipement de régulation du freinage n'intervient que sur l'une des deux roues motrices.

6. Dispositif d'alerte de ralentissement selon l'une des revendications précédentes, **caractérisé en ce que** le dispositif de commande est conçu pour capter un signal sur l'état d'activation d'un freinage assisté pour le véhicule et en tenir compte lors du calcul de la valeur limite d'accélération.

7. Dispositif d'alerte de ralentissement selon l'une des revendications précédentes, **caractérisé en ce que** les moyens (1) pour capter une valeur d'accélération longitudinale a comprennent des capteurs de vitesse de rotation de roue.

8. Dispositif d'alerte de ralentissement selon l'une des revendications précédentes, **caractérisé en ce que** le dispositif de commande est conçu pour adapter la valeur limite d'accélération par le biais d'une valeur moyenne statistique des valeurs de l'accélération longitudinale et transversale d'une période passée définie.

9. Procédé pour activer un signal d'alerte pour réduire les carambolages en circulation routière avec un dispositif d'alerte de ralentissement selon l'une des revendications précédentes, présentant les étapes suivantes :
a) détermination d'une valeur d'accélération longitudinale a ;
b) calcul d'une valeur limite d'accélération dont le dépassement provoque l'émission d'un signal d'alerte, le calcul de la valeur limite d'accélération s'effectuant en faisant intervenir des paramètres saisis P,
un étage (3a) du dispositif de commande présentant un plan (10) « sans fonction », un plan (12) « fonction limitée » et un plan (14) « fonction normale »,
lesquels sont actifs en fonction de la qualité du signal à traiter et entre lesquels a lieu une alternance en fonction de la qualité du signal, la qualité du signal pouvant être déterminée par le biais de marqueurs de qualité,
le dispositif d'alerte de ralentissement étant inactif dans le plan (10) « sans fonction », le dispositif d'alerte de ralentissement pouvant être activé dans le plan (12) « fonction limitée » ou (14) « fonction normale »,
une transition du plan de fonction (10) « sans fonction » au plan de fonction (14) « fonction normale » ayant lieu lorsque la qualité du signal est élevée et
une transition du plan de fonction (10) « sans fonction » au plan de fonction (12) « fonction limitée » ayant lieu en présence d'une qualité moyenne du signal et
un retour au plan de fonction (10) « sans fonction » ayant lieu en présence d'une qualité de signal dégradée dans l'un des plans de fonction (12) « fonction limitée » et (14) « fonction normale »,
de même, un changement du plan de fonction (14) « fonction normale » au plan de fonction (12) « fonction limitée » ayant lieu lorsque la qualité du signal se dégrade d'élevée à moyenne,
à l'inverse, un changement du plan de fonction (12) « fonction limitée » au plan de fonction (14) « fonction normale » ayant lieu lorsque la qualité du signal s'améliore de moyenne à élevée,
et, dans le plan (12) « fonction limitée » ou dans le plan (14) « fonction normale », une transition dans ou depuis un état « dispositif d'alerte de ralentissement actif » (16) dans ou depuis un état « dispositif d'alerte de ralentissement inactif » (18) étant effectuée en fonction des paramètres saisis P respectifs,
c) interposition d'un dispositif de filtrage (2a, 2b) entre les moyens (1) pour capter une valeur d'accélération longitudinale et le dispositif de commande, et
d) commande de moyens d'affichage pour afficher un état d'alarme avertissant de la présence d'un signal d'alerte.
